Europäisches Patentamt

European Patent Office

Office européen des brevets

(19)

(11) Veröffentlichungsnummer: **0 243 986**
**B1**

(12) **EUROPÄISCHE PATENTSCHRIFT**

(45) Veröffentlichungstag der Patentschrift:
07.11.90

(21) Anmeldenummer: 87108472.9

(22) Anmeldetag: 26.07.84

(60) Veröffentlichungsnummer der früheren Anmeldung
nach Art. 76 EPÜ: 0135707

(51) Int. Cl.⁵: **A47J 37/12**, A47J 27/62,
H05B 1/02

(54) Elektrische Beheizung.

(30) Priorität: 18.08.83 DE 3329793

(43) Veröffentlichungstag der Anmeldung:
04.11.87 Patentblatt 87/45

(45) Bekanntmachung des Hinweises auf die Patenterteilung:
07.11.90 Patentblatt 90/45

(84) Benannte Vertragsstaaten:
AT CH DE FR GB IT LI SE

(56) Entgegenhaltungen:
FR-A- 1 225 113
GB-A- 863 118
LU-A- 66 822
US-A- 2 360 727
US-A- 2 694 769
US-A- 2 703 358
US-A- 3 317 709
US-A- 3 384 195
US-A- 3 511 971

(73) Patentinhaber: E.G.O. Elektro-Geräte Blanc u. Fischer,
Rote-Tor-Strasse Postfach 11 80,
D-7519 Oberderdingen(DE)

(72) Erfinder: Knauss,Hermann, Sonnenhalde 6,
D-7519 Oberderdingen(DE)

(74) Vertreter: Patentanwälte RUFF, BEIER und
SCHÖNDORF, Neckarstrasse 50, D-7000 Stuttgart 1(DE)

**Beschreibung**

Die Erfindung betrifft eine elektrische Beheizung einer Wandung für Friteusen oder andere Vorrichtungen gemäß Oberbegriff des Anspruches 1 mit wenigstens einem elektrischen Heizkörper und einem Temperaturfühler, die an der dem zu beheizenden Medium abgewandten Außenseite der Wandung angeordnet sind.

Die FR-A 1 225 113 zeigt eine Vorrichtung gemäß dem Oberbegriff des Anspruches 1, und zwar eine elektrisch beheizte Pfanne mit einem auf die Bodenunterseite aufgelöteten Rohrheizkörper, zwischen dessen Eingangsbiegungen ein Rohr angebracht ist, in das ein Temperaturfühler eines Temperaturbegrenzers eingeschoben ist. Eine ähnliche Anordnung zeigen die GB-A 863 118 und die US-A 3 384 195. In diesen Rohren liegt der Temperaturfühler relativ geschützt, der Wärmekontakt ist jedoch unsicher, weil ein Einführspalt vorhanden sein muß, der unterschiedliche Kontaktierung bewirken kann. Der Fühler ist ferner gegen Herausrutschen nicht ohne weiteres gesichert.

In der US-A 3 511 971 und 3 317 709 sind Temperaturfühler am beheizten Boden bzw. dem Rohrheizkörper durch Schraubschellen festgelegt. Hier ist zwar eine teilweise definierte Andrückung vorhanden, die jedoch nicht über die gesamte Länge reicht. Diese Vorrichtung ist ferner montageaufwendig und schützt den Temperaturfühler nicht optimal.

Aufgabe der Erfindung ist es, eine elektrische Beheizung mit Anbringung eines Temperaturfühlers an der beheizten Wandung zu schaffen, bei der der Temperaturfühler in definiertem guten Wärmekontakt zur beheizten Wandung und ihrer Beheizung liegt.

Diese Aufgabe wird durch den Anspruch 1 gelöst.

Die Temperatur des Rohrheizkörpers, der das Medium über die Wandung beheizt und somit nicht selbst in Kontakt mit dem Medium steht, gelangt einerseits über die Wandung direkt zum Temperaturfühler und andererseits über das Medium, so daß eine doppelte Kopplung vorliegt, die ein außerordentlich schnelles Ansprechen einer Regelung über Begrenzung ermöglicht, ohne daß ein zu frühes Abschalten befürchtet werden muß. Diese Ausbildung ist auch bei anderen Vorrichtungen als der im folgenden beschriebenen Friteuse besonders vorteilhaft und zweckmäßig. Der Temperaturfühler ist für einen Trockengehschutz besonders vorteilhaft. Wenn beispielsweise bei einer Friteuse durch Absinken des Niveaus des Fritierfettes in einem über dem Fettniveau liegenden Wandungsbereich liegt, so wird die Friteuse durch Abschaltung gegen Überhitzung gesichert, weil dann der Temperaturfühler von dem benachbarten Rohrheizkörper unmittelbar über die Wandung beheizt wird, ohne daß das Fett herunterkühlt.

Ausführungsbeispiele der Erfindung sind in den Zeichnungen dargestellt und werden im folgenden näher beschrieben. Es zeigen:

Fig. 1 eine erfindungsgemäße Friteuse in teilweise geschnittener perspektivischer Darstellung,

Fig. 2 ein Detail der Anordung der Rohrheizkörper im Querschnitt,

Fig. 3 und 4 schematische Vertikalschnitte durch weitere Ausführungsformen von Friteusen,

Fig. 5 ein vergrößertes Detail der Beheizung nach den Fig. 3 und 4,

Fig. 6 einen vergrößerten Detailschnitt nach der Linie VI - VI in Fig. 5,

Fig. 7 und 8 Details einer Temperaturfühlerbefestigung in vergrößertem Maßstab und

Fig. 9 die Anordnung von Rohrheizkörpern und Temperaturfühler an einem Rohr.

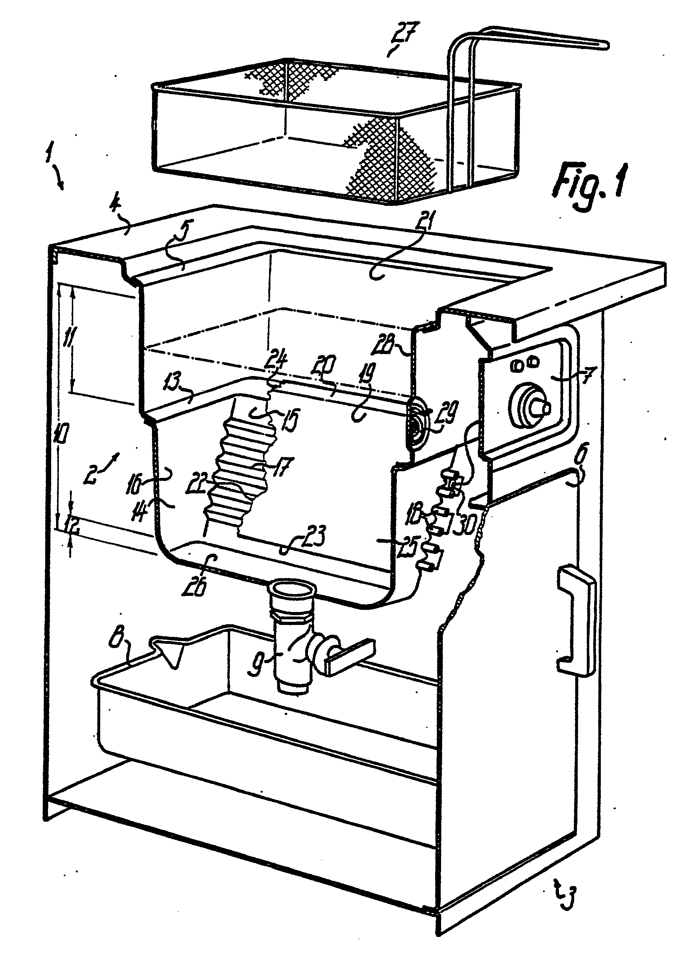

Die in Fig. 1 dargestellte Friteuse 1 weist einen in Draufsicht im wesentlichen länglich rechteckigen Hauptbehälter 2 aus rostfreiem Stahlblech auf, der mit seinem oberen, nach außen abgewinkelten Rand 5 hängend in einen vertieften Ausschnitt der horizontalen Deckplatte 4 eines aus gleichartigem oder anderem Werkstoff bestehenden Schrankes 3 eingesetzt ist. Der Schrank 3 weist an der vorderen Schmalseite eine Türe 6 und über dieser eine Armaturenblende 7 für Kontrolleuchten, Schalter oder dgl. auf. Auf dem Boden des Schrankes steht eine Auffangwanne 8 über der ein in den Boden des Hauptbehälters 2 eingesetzter vertikaler Ablaßstutzen 9 liegt, der mit einem handbetätigbarem Schließventil versehen ist.

Der Hauptbehälter 2 ist im wesentlichen aus zwei übereinanderliegenden Teilen zusammengesetzt, von denen der obere die oberen aufrechten, bis zum Rand 5 reichenden Wandungen des in Draufsicht weiteren Teiles des Hauptbehälters 2 bildet, während der untere, napfförmige Teil mit seiner Unterseite an einem unteren, nach innen vorstehenden Schulterrand des oberen Teiles befestigt ist und in seinem Boden den Ablaß-Stutzen 9 trägt. Es ist auch denkbar, den ganzen Hauptbehälter oder einem der Teile durch zwei Halbschalen zu bilden, deren Anschlußebene durch eine aufrechte Ebene, insbesondere eine Symmetrieebene, gebildet ist oder den Hauptbehälter aus miteinander verschweißten, im wesentlichen ebenen Blechplatten zusammenzusetzen, wobei in diesem Fall die Schweißnähte an der Innenseite des Behälters, insbesondere im Bereich der einspringenden Ecken als Kehlnähte ausgebildet sind, so daß sich glatte Innenflächen auch im Bereich dieser Ecken ergeben.

In Fig. 1 ist in etwa halber Höhe des oberen weiteren Abschnittes des Hauptbehälters 2 strichpunktiert der Oberflächenspiegel des Fritierfettes angedeutet, den dieses bei nicht mit Fritiergut gefüllter Friteuse einnimmt. Nach Eingeben der maximalen Fritiergutmenge kann der Fritierfettspiegel bis nahe an den Rand 5 reichen, d.h. daß sich der Fritierfettraum 10 von dieser maximalen Höhe des Fritierfettspiegels bis zum Boden des Hauptbehälters 2 erstreckt. Der Fritierraum 11 reicht von gleicher Höhe nach unten demgegenüber nur bis geringfügig oberhalb eines nach innen vorspringenden, entlang der Außenwandungen umlaufenden Stufenbodens 13, welcher den Fritierraum 11 gegenüber einem unmittelbar darunter anschließenden Strömungsumwälz-Schacht 14 absetzt, der durch den unteren Behälterteil gebildet und im Anschluß an den Stufenboden 13 um dessen Gesamtbreite in seinen Horizontalquerschnitten kleiner als der Fritierraum 11 ist. Die beiden einander gegenüberstehenden, zur Front der Friteuse rechtwinkligen Längs-Wandungen 15 des Schachtes 14 sind unter gleichen spitzen Winkeln nach außen geneigt, während die beiden rechtwinklig dazu stehenden Wandungen 16 vertikal sind. Die Wandungen 15 sind über ihre ganze Länge und eine Höhe von mehr als der Hälfte der Wandungshöhe mit sickenartigen, wellenförmig unmittelbar ineinander übergehenden Profilierungen versehen; die Sicken 17 bilden an der Außenseite der jeweiligen Wandung 15 durchgehende, im Querschnitt prismenförmige Nuten für die Aufnahme jeweils eines über die ganze Länge der Wandung durchgehenden, stabförmig geradlinigen Rohrheizkörpers 18. Die Rohrheizkörper 18 sind in metallischer Verbindung auf die Außenfläche der jeweiligen Wandung 15 aufgebracht, beispielsweise aufgelötet oder aufgeschweißt, vorzugsweise aber nach einem speziellen Lötverfahren, z.B. mit einem Nickel-Phosphor-Lot, das eine thermisch nicht mehr lösbare Verbindung schafft und auch "Anlegieren" genannt wird. Mit einem Wandabstand von mehreren cm ist benachbart zur Innenfläche jeder Wandung 15 ein durch ein Blech gebildeter, herausnehmbarer Einsatz 19 vorgesehen, der einen oberen, mit geringem Abstand oberhalb des zugehörigen Abschnittes des Stufenbodens 13 liegenden und zu diesem annähernd parallelen abgewinkelten Randstreifen 20 aufweist, der mit Abstand von der gegenüberstehenden aufrechten Wandung 21 des Fritierraumes 11 liegt. Der mit seinen Seitenkanten dicht an die Wandungen 16 anschließende Einsatz 19, der mit Abstand oberhalb des Bodens des Hauptbehälters 2, jedoch unterhalb des untersten Rohrheizkörpers 18 endet, begrenzt einen entlang der Sicken 17 vorbeiführenden aufsteigenden Strömungskanal 22, dessen unteres Ende 23 mit geringem Abstand oberhalb des Bodens des Hauptbehälters 2 liegt und dessen oberes, durch den Stufenboden 13 und den Randstreifen 20 begrenztes abgewinkeltes Ende 24 gegen die benach barte Wandung 21 gerichtet ist. Der mittlere Raum zwischen den beiden aufsteigenden Strömungskanälen 22 bildet einen absteigenden Strömungskanal 25 für das Fritierfett, das somit zwischen den Einsätzen 19 aus dem Fritierraum 11 nach unten strömt, über dem Boden des Hauptbehälters 2 unter Teilung nach beiden Seiten in die Strömungskanäle 22 gelangt, in diesen unter Aufheizung und Beschleunigung wieder nach oben strömt und somit dauernd in mindestens zwei geschlossenen, vom Fett-Oberflächenspiegel bis zum Boden des Hauptbehälters 2 reichenden Kreisläufen wirksam umgewälzt wird. Der Raum unterhalb der unteren Enden 23 der Strömungskanäle 22 bildet einen sog. "kalten Sumpf", d.h. einen vom Boden 26 des Hauptbehälters 2 begrenzten Sumpfraum 12, in dem die Temperatur des Fettes wesentlich unter der übrigen Behältertemperatur liegt und in dem sich Rückstände ansammeln können, die durch das Sieb eines für die Nahrungsmittelaufnahme bestimmten und in den Fritierraum 11 zu stellenden Fritierkorbes 27 fallen; der Fritierkorb 27 steht dabei auf den Randstreifen 20, so daß das in deren Bereich austretende aufgeheizte Fritierfett unmittelbar in den Fritierkorb 27 strömt.

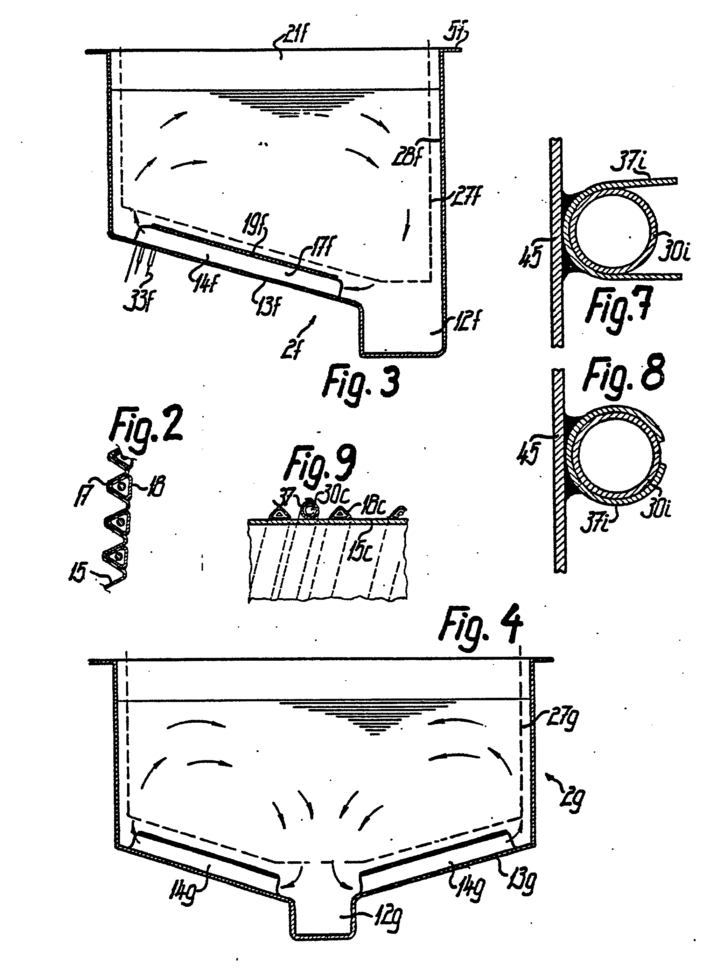

Unmittelbar oberhalb des Stufenbodens 13 ist an der zur Front benachbarten Wandung 28 des Fritierraumes 11 ein Fett-Temperaturfühler 29 angeordnet, der in eine in die Wandung eingeprägte flache kreisförmige Vertiefung an der Außenseite dieser Wandung 28 großflächig anliegend eingesetzt und in einem Abstand von ca. 2 bis 3 mm von seinem Basisblech liegt, damit Fett am gesamten Umfang vorbei strömen kann. Der Temperaturfühler 29 dient zur von Hand veränderbaren Regelung der elektrischen Stromversorgung der Rohrheizkörper 18. Zwischen zwei Rohrheizkörpern 18 und an entsprechender metallischer Verbindung mit diesen und/oder mit dem dazwischenliegenden Abschnitt der Wandung 15 ist ein geradliniger Temperaturfühler 30 vorgesehen, welcher hier als Trockengehschutz überwiegend auf die Temperatur der Rohrheizkörper 18 anspricht, so daß auch bei unterhalb des Temperaturfühlers 29 stehendem Fettspiegel Brandgefahren vermieden sind. Durch die beschriebene Temperaturmessung ist eine ausgezeichnete, schnell zugreifende und sowohl den Einfluß der Flüssigkeitstemperatur als auch den Beheizungseinfluß fassende Regelung der Temperaturbegrenzung möglich. Die Anordung des Temperaturfühlers 30 kann entsprechend Fig. 7 und 8 erfolgen. In den Fig. 2 bis 16 sind für einander entsprechende Teile die gleichen Bezugszeichen wie in Fig. 1, jedoch mit kleinen Buchstaben als Indices, verwendet.

Fig. 2 zeigt die zur Erhöhung der Kontaktfläche mit der Wandung 15a vorzugsweise dreieckigen Querschnitte der Rohrheizkörper 18 und der Sicken 17. Im dargestellten Ausführungsbeispiel sind die Rohrheizkörper 18 im Querschnitt annähernd gleichseitig dreiecksförmig mit abgerundeten Eckbereichen, derart, daß sie an zwei Dreieckseiten im wesentlichen ganzflächig an den Sickenschenkeln der jeweils zugehörigen Sicke 17 anliegen. Die Sicken 17 sind im Querschnitt nach Art eines gleichförmigen Wellenprofiles ausgebildet.

Bei einer nicht dargestellten Anbringung der dreiecksförmigen Rohrheizkörper an einer ebenen Wandung können zwischen die Außenfläche der Wandung und der Außenfläche des Rohrheizkörpers Kompensstreifen 36 aus einem gegenüber der Wandung besser wärmeleitfähigen Werkstoff, beispielsweise Baustahl, vorgesehen sein. Die Kompensstreifen, deren Dicke etwa in der Größenordnung derjenigen in der Wandung liegt, aber auch größer sein kann, haben eine gegenüber der an ihnen anliegenden Kontaktfläche des Rohrheizkörpers 18 größere Breite, wobei im dargestellten Ausführungsbeispiel benachbarte Kompensstreifen 36 mit ihren Längskanten unmittelbar aneinanderstoßen oder einteilig ineinanderübergehen. Der Temperaturfühler kann in wärmeleitender metallischer Verbindung mit der Wandung bzw. den zugehörigen Kompensstreifen 36 angebracht sein, so daß eine sehr schnell zugreifende Messung gewährleistet ist.

Der Hauptbehälter 2f einer Friteuse gemäß Fig. 3 weist eine über den größten Teil seiner Länge durchgehende, unter einem spitzen Winkel zur Horizontalen schräg nach unten geneigte Bodenwandung 13f auf, an deren tiefsten Stelle sich ein an die zugehörige aufrechte Wandung 28f anschließender Sumpfraum 12f anschließt, der einen sich über die Breite (rechtwinklig zur Zeichenebene) reichenden, gegenüber der Bodenwandung 13f vertieften Kanal bildet. An der Bodenwand 13f sind Blechteile 17f, 19f derart befestigt, daß über die Breite des Fritierraumes nebeneinander und parallel zur Neigungsrichtung der Bodenwandung 13f liegende Strömungsschächte 14f gebildet sind, deren Eintritt oberhalb und am Rand des Sumpfraumes 12f und deren Austritt benachbart zur an die höchste Stelle der Bodenwandung 13f anschließenden aufrechten Wandung liegen. Die Strömungsschächte 14f verlaufen vom Sumpfraum 12f unter einem relativ flachen Winkel, vorzugsweise zwischen 20° und 30°, schräg aufwärts, wie die Bodenwandung 13f. Während in Fig. 3 eine asymmetrische Ausführung mit einseitig angeordnetem Sumpfraum 12f und nach einer Seite hin schräg verlaufender Bodenwandung 13f dargestellt ist, ist in Fig. 4 eine symmetrische Ausführung des Hauptbehälters 2g dargestellt, bei der der Sumpfraum 12g mittig liegt und die Bodenwandung 13g von dort aus nach beiden Seiten schräg aufwärts verläuft.

In den Fig. 5 und 6 ist die Beheizung im Detail dargestellt. Die Bodenwandung 13f ist nahezu über ihre gesamte Fläche von einem Einsatzträger 40 gebildet, der aus einem schalenförmig vertieften Blechteil besteht, dessen umlaufender Flanschrand mit angepunkteten Stehbolzen 41 und zwischengelegter Dichtung 42 an der Wandung des Behälters 2f abdichtend angebracht ist. Er kann auch eingeschweißt sein.

Im Boden 43 des Einsatzträgers 40 sind langlochartige und mit einem nach außen umgelegten Rand 44 versehene tüllenartige Schlitze ausgestanzt, in die langgestreckte Taschen 17f mit der Querschnittsform eines umgekehrten, schmalen und hohen U eingeschweißt sind, wobei die unteren Ränder der Taschen 17f mit den unteren Kanten der Ränder 44 mit einer Stirnschweißung verbunden sind. Die über den größten Teil der Länge des Einsatzträgers 40 und damit der Boden wandung 13f reichenden Taschen stehen im Behälterinneren rippenartig vor und bilden zwischen sich die Strömungsschächte 14f, deren Breite etwa das Zweifache und deren Tiefe etwa das Drei- bis Vierfache der Dicke der Taschen 17f beträgt.

Die Taschen 17f sind aus spiegelbildlich zueinander gekehrten, an einer mittleren Längsnaht miteinander verbundenen Halbschalen 45 aus rostfreiem Stahlblech zusammengesetzt, und auf jede Halbschale ist ein Rohrheizkörper 18f aufgebracht, der in die Form einer umgelegten und daher vierfach liegenden Schlaufe geformt ist und dessen Anschlußenden 33f aus der U-förmigen, nach unten und damit zum Behälteräußeren hin offenen Tasche 17f herausragen. Der Rohrheizkörper 18f ist durch einen dem Hartlöten ähnlichen Vorgang angebracht, der als "Anlegieren" bezeichnet wird. Es wird dort mit einem Nickel-Phosphor-Lot gearbeitet, bei dem der metallische Mantel des Rohrheizkörpers und das Material der Tasche eine solche metallische Verbindung eingehen, daß sie thermisch praktisch nicht voneinander zu trennen sind, wobei das im Lötvorgang entweichende Phosphor dafür sorgt, dem Lot anfänglich einen niedrigeren Schmelzpunkt zu geben. Diese Verbindung ist außerordentlich temperaturbeständig und sorgt für den besten Wärmeübergang. Nach dem Aufbringen der Rohrheizkörper auf jede der Halbschalen werden jeweils zwei in der beschriebenen Weise miteinander verschweißt und danach in den Einsatzträger 40 eingeschweißt. Es ist jedoch auch möglich, diese zueinander parallelen, fast über die ganze Länge des Einsatzes reichenden Rippen oder Taschen 17f dadurch zu bilden, daß jeweils eine der Halbschalen einer Tasche zusammen mit dem entsprechenden Abschnitt des Bodens 43 und einer Halbschale der benachbarten Tasche ein U-förmiges Bauteil mit nach außen gerichtetem abgerundetem Rand und auf die Außenseite der Schenkel aufgebrachten Rohrheizkörpern bildet, wobei dann der Einsatzträger 40 durch Zusammenschweißen derartiger parallel zueinander gelegter Bauteile längs der Naht 29 gebildet werden würde. Es ist ferner auch möglich, Rippen oder Taschen in anderer Form vorzusehen und ggf. auch den Boden 43 mit außen in wärmeleitender Verbindung angebrachten Rohrheizkörpern zu versehen. Wichtig ist jedenfalls, daß wesentliche Wandabschnitte der Strömungsschächte 14f möglichst gleichmäßig beheizt werden.

Die zueinander parallelen Strömungsschächte 14f sind an ihrer Oberseite durch eine Abdeckung 19f in Form eines ebenen Bleches verschlossen, und zwar im wesentlichen über ihre ganze Länge. Jeweils am Beginn und am Ende eines Strömungsschachtes 14f bzw. der schmalen Stirnkanten der Taschen 17f sind von der Abedckung freie Bereiche vorgesehen, die eine Eintrittsöffnung 23f und eine Austrittsöff nung 24f bilden. Die Abdeckung 19f ist lose aufgelegt und durch nicht dargestellte Führungen bzw. Halterungen, beispielsweise in ein Loch der Abdeckung eingreifende Stifte an den Taschen oder an dem Behälter, in der dargestellten Lage festgelegt.

Durch die Erwärmung der Flüssigkeit in den Strömungsschächten 14f entsteht ein Auftrieb, der zu einer sehr zügigen Strömung in Richtung der Pfeile 46 und im gesamten Behälter sorgt, wie aus den Strömungspfeilen in den Fig. 11 und 12 zu erkennen ist. Dabei ist es vorteilhaft, daß im Bereich über dem Sumpfraum 12f die Strömung abwärts gerichtet ist und dann nach der Seite abgelenkt wird, weil dadurch eventuell mitgerissene Partikel in den Sumpfraum 14 heruntersinken können, der vom Ölumlauf ausgenommen ist und wegen der schlechten Wärmeleitung der Flüssigkeiten und der Tatsache, daß keine Konvektion vorliegt, wesentlich, nämlich ca. 100° C, kälter ist als der übrige Behälter. Die in Fig. 5 dargestellte vertiefte Form des Einsatzträgers 40 spart Platz im Behälter, da die Taschen 17f nur wenig über die Höhe des Behälterflansches hinwegragen; es kann jedoch auch ein gerader Einsatzträger verwendet werden, der eine noch bessere Anströmung der Ein- und Austrittsöffnungen 23f, 24f ermöglicht.

Die Regelung und Temperaturbegrenzung erfolgt über sog. Hydraulikregler, d.h. Temperaturregler mit einem mit Ausdehnungsflüssigkeit gefüllten System, das einen rohrförmigen Temperaturfühler 30f enthält, der über ein Kapillarrohr 47 mit einer nicht dargestellten Ausdehnungsdose verbunden ist, die auf einen Schnappschalter einwirkt. Der Temperaturfühler 30f ist parallel in relativ dichtem Abstand neben einer der Rohrheizkörperwindungen angeordnet, und zwar ebenfalls in wärmeleitender Verbindung mit der zugehörigen Wandung der Halbschale 45. Dies kann durch das in Fig. 7 und 8 dargestellte Wärmeleitelement 37i geschehen, das anfänglich die Form eines U-förmigen, fast über die gesamte Länge des Temperaturfühlers reichenden Blechstreifens hat, der in seinem Mittelbereich an die Wandung der Halbschale 45 von innen metallisch verbunden, d.h. anlegiert oder -gelötet ist. Zwischen die U-förmigen Schenkel des Wärmeleitelementes wird der Temperaturfühler 30i eingelegt (Fig. 7), und danach werden die Schenkel um den meist rohrförmigen Temperaturfühler herumgelegt (Fig. 8), so daß er eine gut wärmeleitende Verbindung zur Wandung hat. Durch den Abstand dieser Anordnung vom Rohrheizkörper 18f läßt sich die Größe des Wärmeeinflusses von der Beheizung bzw. vom beheizten Medium ändern. Dementsprechend kann ein Temperaturfühler zur Regelung und als Trockengehschutz in ähnlicher Weise angebracht werden, lediglich in unterschiedlichem Abstand von den Rohrheizkörpern. Beispielsweise könnte ein hauptsächlich als Trockengehschutz vorgesehener Temperaturfühler in den Zwischenraum zwischen zwei Rohrheizkörpern eingesetzt werden.

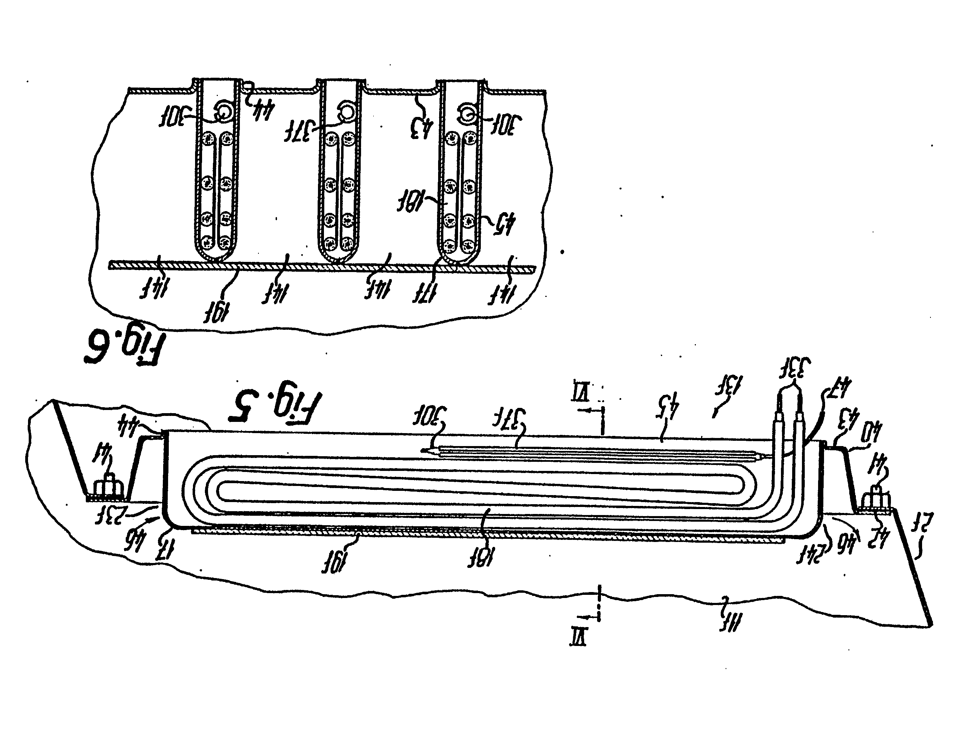

In Fig. 9 ist eine Beheizung eines Rohrs dargestellt. Der Rohrheizkörper 18c ist hier wendelförmig am Außenumfang einer Rohrwandung 15c angeordnet. Bei dieser Ausführungsform steht der zwischen zwei Wendeln des Rohrheizkörpers 18c wendelförmig am Außenumfang der Wandung 15c angeordnete Temperaturfühler 30c nur mit der Wandung 15c in unmittelbar wärmeleitender Verbindung. Zu diesem Zweck ist an der Außenfläche der Wandung 15c ein aus Blech bestehendes Wärmeleitelement 37 in metallischer Verbindung aufgebracht, welches im Querschnitt an den des Temperaturfühlers 30c angepaßt und nach Einlegen des Temperaturfühlers durch entsprechendes Falzen eng anliegend um den Umfang des Temperaturfühlers 30c geschlossen ist.

## Patentansprüche

1. Elektrische Beheizung einer Wandung für Friteusen oder andere Vorrichtungen mit wenigstens einem elektrischen Heizkörper (18, 18c, 18f) und einem Temperaturfühler (30, 30c, 30f, 30i), die an der dem zu beheizenden Medium abgewandten Außenseite der Wandung (15, 15c, 45) angeordnet sind, wobei der Heizkörper (18, 18c, 18f) wenigstens ein Rohrheizkörper ist, der an der Wandung (15, 15c, 45) in wärmeleitender Verbindung angebracht ist und der Temperaturfühler (30, 30c, 30f, 30i) stab- oder rohrförmig ausgebildet und benachbart zu dem Rohrheizkörper (18f) und/oder zwischen zwei benachbarten Rohrheizkörpern (18) bzw. -windungen in wärmeleitender Verbindung an der Wandung (15, 15c, 45) angebracht ist und von einem Wärmeleitelement (37, 37f, 37i) über den größten Teil seines Umfanges umschlossen ist, dadurch gekennzeichnet, daß das Wärmeleitelement ein anfänglich U-förmiges, mit seinem mittleren Teil mit der Wandung (15c, 45) metallisch verbundenes Blechprofil ist, dessen U-Schenkel um den Temperaturfühler herum gelegt sind.

2. Elektrische Beheizung nach Anspruch 1, dadurch gekennzeichnet, daß der Temperaturfühler (30f) durch das Wärmeleitelement (37f) im wesentlichen über seine gesamte Länge umschlossen ist.

3. Elektrische Beheizung nach einem der vorhergehenden Ansprüche, dadurch gekennzeichnet, daß der Temperaturfühler (30c, 30f, 30i) zur Regelung und Temperaturbegrenzung ausgebildet ist.

4. Elektrische Beheizung nach einem der vorhergehenden Ansprüche, dadurch gekennzeichnet, daß der Temperaturfühler (30, 30c, 30f, 30i) Teil eines mit Ausdehnungsflüssigkeit gefüllten Schaltsystems ist.

5. Elektrische Beheizung nach einem der vorhergehenden Ansprüche, dadurch gekennzeichnet, daß der Rohrheizkörper (18, 18c, 18f) und/oder ein Wärmeleitelement (37, 37f, 37i) an die Außenseite der Wandung (15, 15c, 45) angelötet bzw. anlegiert sind.

## Claims

1. Electric heating device for a wall for deep fat fryers or other means with at least one electric heater (18, 18c, 18f) and a temperature sensor (30, 30c, 30f, 30i, ) which are located on the outside of the wall (15, 15c, 45) remote from the medium to be heated, in which the heater (18, 18c, 18f) is at least one tubular heater, which is fitted in heat conducting connection to the wall (15, 15c, 45) and the temperature sensor (30, 30c, 30f, 30i) has a rod or tube-like construction and is fitted immediately adjacent to the tubular heater (18f) and/or between two adjacent tubular heaters (18) or turns in heat conducting connection to the wall (15, 15c, 45) and is surrounded over most of its circumference by a heat conducting element (37, 37f, 37i), characterized in that the heat conducting element is an initially U-shaped sheet metal profile metallically connected by its central part to the wall (15c, 45) and whose U-legs are placed around the temperature sensor.

2. Electrical heating device according to claim 1, characterized in that the temperature sensor (30f) is surrounded over substantially an entire length by the heat conducting element (37f).

3. Electrical heating device according to one of the preceding claims, characterized in that the temperature sensor (30c, 30f, 30i) is constructed for regulating and temperature limitation.

4. Electrical heating device according to one of the preceding claims, characterized in that the temperature sensor (30, 30c, 30f, 30i) is part of a switching system filled with an expansion fluid.

5. Electric heating device according to one of the preceding claims, characterized in that the tubular heater (18, 18c, 18f) and/or a heat conducting element (37, 37f, 37i) are soldered or picked-up to the outside of the wall (15, 15c, 45).

**Revendications**

1. Dispositif de chauffage électrique d'une paroi, pour friteuses ou autres appareils, avec au moins un corps chauffant électrique (18, 18c, 18f) et une sonde de température (30, 30c, 30f, 30i), qui sont disposés sur le côté extérieur de la paroi (15, 15c, 45) opposé au fluide à chauffer, le corps chauffant (18, 18c, 18f) étant au moins un corps chauffant tubulaire, qui est fixé sur la paroi (15, 15c, 45c) en liaison thermoconductrice, et la sonde de température (30, 30c, 30f, 30i) étant réalisée en forme d'aiguille ou tubulaire, étant fixée sur la paroi (15, 15c, 45) en liaison thermoconductrice au voisinage du corps chauffant tubulaire (18f) et/ou entre deux corps chauffants tubulaires voisins (18) ou spires voisines de corps chauffants tubulaires, et étant entourée d'un élément thermoconducteur (37, 37f, 37i) sur la majeure partie de sa circonférence, caractérisé en ce que l'élément thermoconducteur est une tôle profilée initialement en forme de U, assemblée métalliquement à la paroi (15c, 45) par sa partie centrale, et dont les branches du U sont repliées autour de la sonde de température.

2. Dispositif de chauffage électrique selon la revendication 1, caractérisé en ce que la sonde de température (30f) est entourée par l'élément thermoconducteur (37f) sensiblement sur toute sa longueur.

3. Dispositif de chauffage électrique selon l'une des revendications précédentes, caractérisé en ce que la sonde de température (30c, 30f, 30i) est conçue aux fins de régulation et de limitation de température.

4. Dispositif de chauffage électrique selon l'une des revendications précédentes, caractérisé en ce que la sonde de température (30, 30c, 30f, 30i) fait partie d'un système de commutation rempli de liquide de dilatation.

5. Dispositif de chauffage électrique selon l'une des revendications précédentes, caractérisé en ce que le corps chauffant tubulaire (18, 18c, 18f) et/ou un élément thermoconducteur (37, 37f, 37i) sont brasés ou partiellement alliés sur le côté extérieur de la paroi (15, 15c, 45).

EP 0 243 986 B1

Fig.1

Fig. 3

Fig.7

Fig. 8

Fig.2

Fig.9

Fig. 4

Fig.5

Fig.6